Europäisches Patentamt

European Patent Office

Office européen des brevets

(11) Publication number: **0 008 861**
A2

## EUROPEAN PATENT APPLICATION

(21) Application number: 79301453.1

(22) Date of filing: 20.07.79

(51) Int. Cl.³: **G 01 C 17/10**

(30) Priority: 05.09.78 GB 7835700

(43) Date of publication of application:
19.03.80 Bulletin 80/6

(84) Designated Contracting States:
DE FR GB IT NL

(71) Applicant: S.G. BROWN LIMITED
Greycaine Road
Watford, Hertfordshire WD2 4XU(GB)

(72) Inventor: Ring, Ronald H.
Greycaine Road
Watford, Hertfordshire WD2 4XU(GB)

(74) Representative: Jones, Ian et al,
POLLAK MERCER & TENCH High Holborn House 52-54
High Holborn
London WC1V 6RY(GB)

(54) Digital bearing repeater.

(57) A bearing repeater has a differential synchro (22) receiving an electrical signal dependent on the bearing of the repeater and mechanically geared to the bearing sight (20), the synchro output being supplied to a digital display (39) of which the reading is projected by optical means into the field of view of the sight. A further digital display (38) can be provided for displaying the bearing of the sight outside the field of view. The bearing sight can be locked to the repeater so that the bearing displayed is that of the repeater.

FIG2.

-1-

DESCRIPTION

DIGITAL BEARING REPEATER

The invention relates to a bearing repeater for marine use.

Bearing repeaters conventionally comprise a compass card electrically slaved to a ship's compass and usually marked with the cardinal points and with degree divisions starting with zero at North. By comparison of a compass card with a datum line fixed on the ship's longitudinal axis, known as a lubber line, the ship's bearing can be determined. The reading is absolute, that is, related to the earth's axis. Bearing repeaters are however provided primarily to enable bearings to be taken of distant objects and are therefore provided with viewing sights which can be turned in azimuth to align a datum mark with the object. The datum mark can then be compared with the compass card to enable the bearing of the object to be determined. A prism may be provided so that the card and the object are brought into adjacency in the viewing field.

Such repeaters require the user first to move the viewing sight to view the object and then to read the bearing, usually in numbers of degrees from North, from the card. It would be advantageous to provide for the reading of the bearing to be done simultaneously with the alignment of the viewing sight with the object and without the need to interpret the markings of the card.

The invention accordingly provides a bearing repeater having a bearing sight and means for presenting the bearing of an object on which the sight is trained in digital form within the field of view of the sight.

The invention can consist in a bearing repeater having sighting means movable to view an object of which the bearing is to be read, means responsive to the position of the sighting means and to a signal dependent on the bearing of the repeater to provide an output signal corresponding to the desired bearing, and means for representing the output signal in digital form in the field of view of the sighting means.

The invention is conveniently carried into effect by supplying the angular position of the sighting means as a mechanical input to a differential synchro to which is supplied an electrical signal derived from a ship's compass, the synchro output being applied to operate a digital display unit associated with optical means whereby the display is seen in the field of view of the sighting means.

The invention thus provides the advantage that the bearing of a distant object can be immediately and unmistakably obtained by simple means.

By way of illustration, an embodiment of the invention is described below and illustrated in the accompanying drawings, in which:

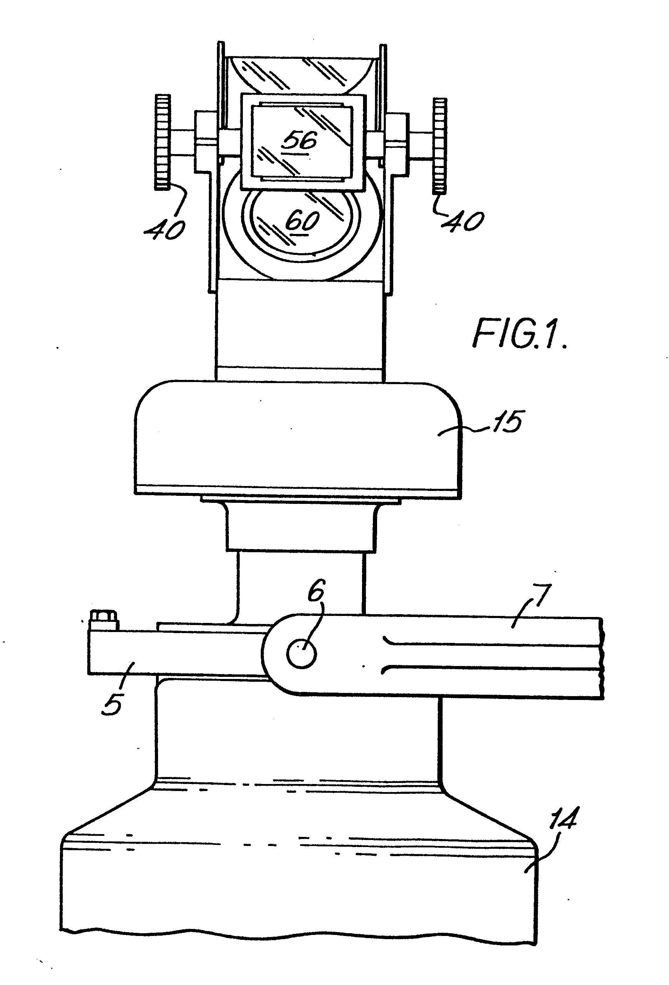

Figure 1 is a partial front view of a bearing repeater embodying the invention;

Figure 2 is a plan view of the repeater;

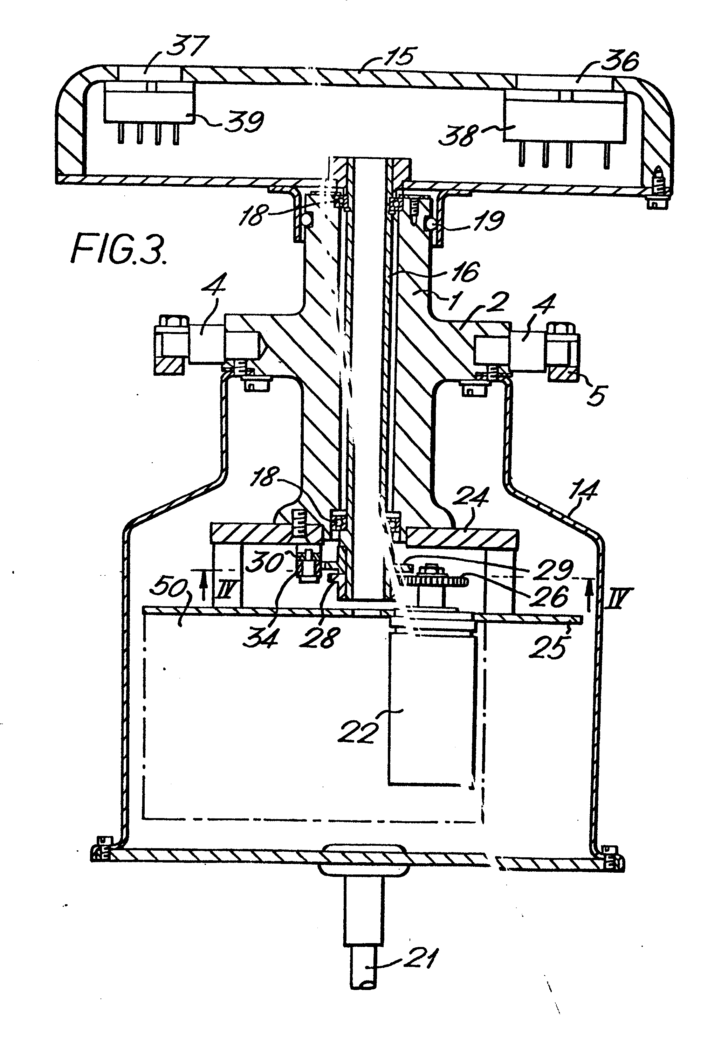

Figure 3 is a sectional side view partly, schematic of the repeater with a sighting unit thereof omitted;

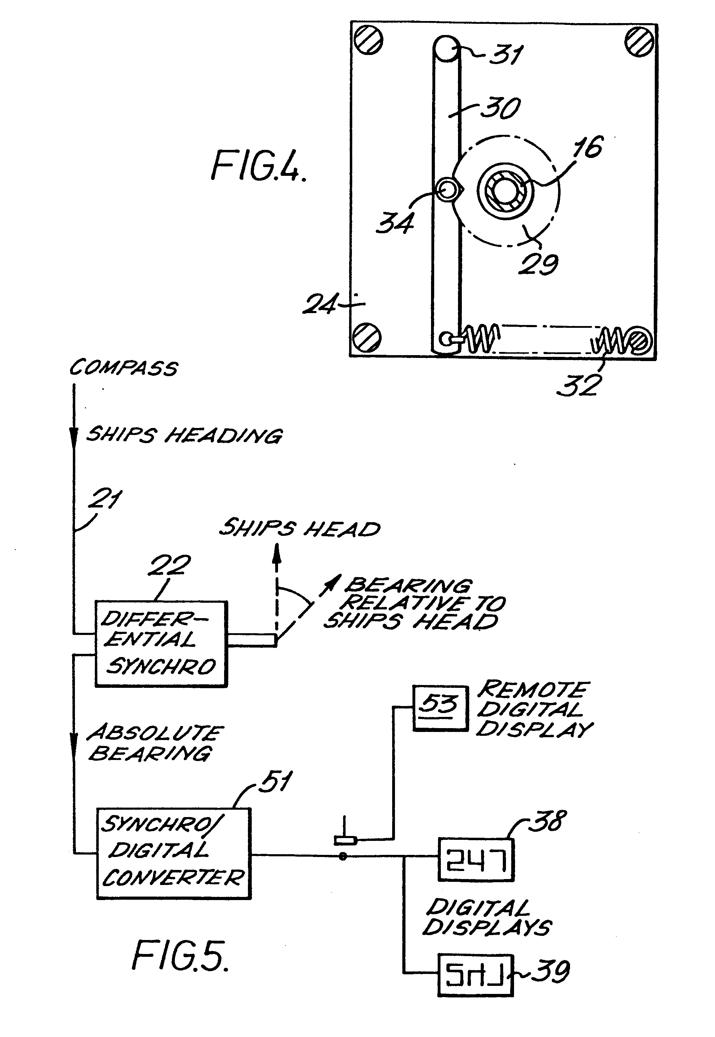

Figure 4 is a cross-sectional view of the repeater on the line IV-IV of Figure 3; and

Figure 5 is a block circuit drawing.

The illustrated bearing repeater comprises a main bearing sleeve 1 with a flange 2 projecting outwardly therefrom. The flange 2 carries diametrically opposed pivotal connections 4 by which it is connected to an inner gimbal ring 5 which is pivotally connected by pivotal connections 6 opposed on a diameter at right angles to that of the connections 4 in an outer gimbal 7. The outer gimbal member 7 is mounted on a vertical bulkhead by a bracket 8, at a selected angular position about an axis 9 set by a lock bolt 10 extending through an arcuate slot 12 in the outer gimbal member.

A lower casing 14 depends from the flange 2 and an upper casing 15, which is generally rectangular in plan, is rotatably carried in the sleeve 1 by a tube 16 which is journalled by upper and lower bearings 18. The lower bearing 18 is within the casing 14 and the upper bearing is shielded by a tubular cover 19 depending from the base of the upper casing 15. A sighting unit 20 projects upwardly from the casing 15.

Because of the gimbal mounting, the common axis of the sleeve 1 and the tube 16 normally remains substantially vertical. The upper casing 15 can be rotated manually about this axis relative to the casing 14 to bring sighting elements in the sighting unit 20 to bear on an object of which the bearing is to be determined.

From a transmitting synchro associated with the ship's compass (not shown), an electric signal representing the ship's heading is conveyed through a cable 21 to a differential synchro 22 within the casing 14. An end plate 24 is secured to the lower end of the main bearing sleeve 1 and from this is suspended a mounting plate 25. The synchro 22 is received in an aperture in the plate 25 to extend mainly below it with an input shaft protruding upwardly and having fixed thereto a gear wheel 26; this meshes with a gear wheel 28 secured to the lower end of the tube 16 which extends below the end plate 24.

The protruding lower end of the tube 16 also carries a notched disc 29. An arm 30 has one end pivoted at 31 on the plate 24, the other end being acted upon by a spring 32 to engage a roller 34 journalled on the arm with the periphery of the disc 29. These parts constitute a detent mechanism arranged to be engaged, with the roller 34 in the notch of the disc 29, when the sight line of the sighting apparatus 20 is directly forward, so that the repeater gives the ship's bearing.

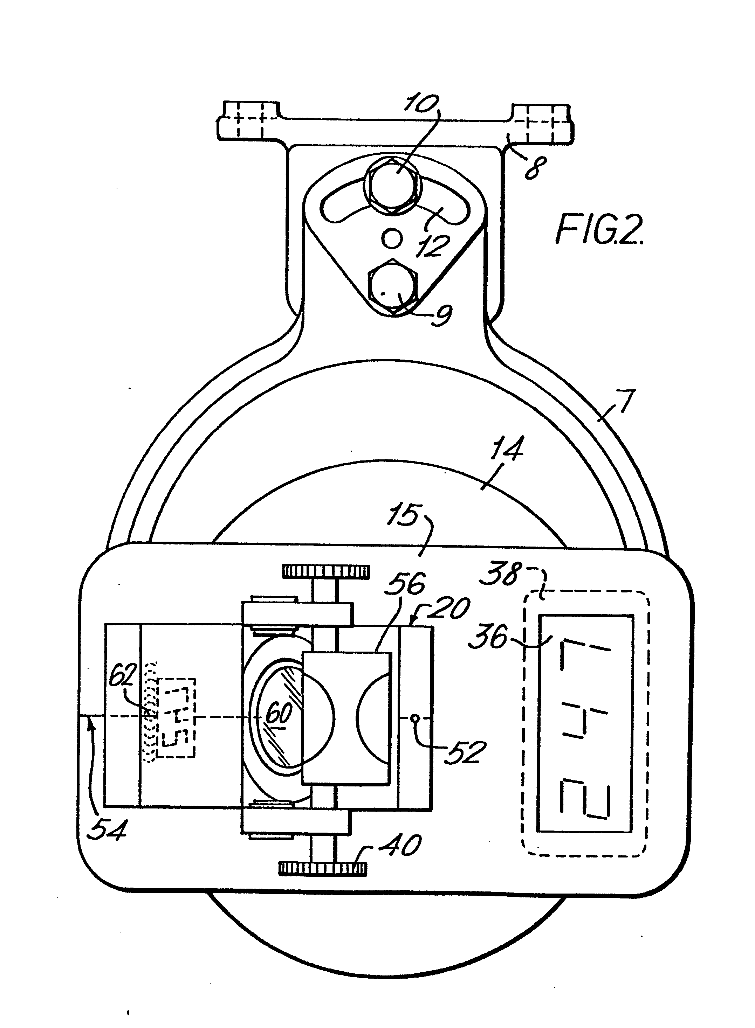

The upper casing 15 which turns with the tube 16 has an upper wall provided with larger and smaller glazed apertures 36, 37, through which are exposed respective digital display units 38, 39.    Upstanding from this upper wall is the sighting unit 20 which comprises an optical system which can be pivoted about a horizontal axis by means of knurled wheels 40.    The viewing field which the system provides can thus be aligned with an object at any position on the azimuth and of any altitude by rotation of the unit 20 with the casing 15 and by turning the wheels 40.    The unit 20 is located on the casing 15 in proximity to the glazed aperture 37 so that the display elements of the display unit 39 are to be seen in the field of view by transmission through a prism.    As shown in Figure 2, this display is in mirror image form, so as to be seen correctly in the viewing field.

Both display units 38, 39 are supplied with electric signals, by way of wires (not shown) extending through the tube 16, from circuitry 50 accommodated in the casing 14 beneath the plate 25 and adjacent the synchro 22, from which the circuitry takes its input.

The angular position of the input shaft to the synchro 22 depends on that of the casing 15, because of the mechanical connection to the shaft through the tube 16 and the gear wheels 26, 28.    When the casing 15 is turned so that the sighting elements view an object of which the bearing is to be determined, the synchro 22 thus receives an input dependent on this bearing, as well as the information from the ship's compass received electrically through the cable 21.    The synchro is a differential synchro so its output to the circuitry 50 represents the desired absolute bearing of the object.

In the circuitry 50, the synchro output is converted in a synchro/digital converter 51 to control the digital display units 38, 39 so that these show the bearing in degrees from North.    The output of the converter 51 may also be supplied to a remote digital display unit 53.

The sighting unit 20 is provided with an upstanding rear sighting rod 52 and a horizontal sighting line 54. To take a 'transit' bearing, i.e. the bearing of an object on the horizon, the unit 20 is turned until alignment is obtained between the rod 52, the line 54 and the distant object seen by looking over the unit's prism 56. The horizontal sighting line 54 is viewed through the prism 56. When this alignment is achieved, the bearing can be read in the field of view through the prism. To take the bearing of the sun, the whole unit 20 is first turned so as approximately to bear on the sun. The prism 56 is turned by the knurled knob 40 so as to direct the light from the sun on to a lens 60. The lens 60 focusses a small image 62 of the sun on to the unit 20 in the vicinity of the sighting line 54. Thus, one does not look directly at the sun, but at th small image. The unit 20 is turned until the image 62 straddles the line 54 and the bearing can then be read from the normal display 38.

The display unit provides a check on the reading and can be used to provide a permanent display of the ship's bearing if the casing 15 is returned after use to the position in which the roller 34 detent mechanism is engaged in the notch of the disc 29.

It will be appreciated that a mirror may replace the prism so that the horizontal card of the repeater can be seen by glancing into the mirror.

CLAIMS

1. A bearing repeater having a bearing sight and means for presenting the bearing of an object on which the sight is trained in digital form within the field of view of the sight.

2. A bearing repeater according to claim 1 wherein the means for presenting the bearing of the object is responsive to the orientation of the bearing sight and to a signal dependent on the bearing of the repeater, thereby to provide said bearing as an absolute bearing.

3. A bearing repeater according to claim 2 comprising a differential synchro, wherein the synchro is arranged to receive electrically said signal dependent on the bearing of the repeater and is mechanically geared to the sight thereby to receive a signal dependent on the bearing of the sight relative to the repeater, and wherein the bearing presenting means is arranged to receive the output of the differential synchro as said digital bearing.

4. A bearing repeater according to claim 1, 2 or 3 wherein the bearing sight comprises two sighting members and an optical arrangement therebetween, the optical arrangement being arranged to project into said field of view the output of a digital display located beyond said field of view and representing the bearing of the sight.

5. A bearing repeater according to claim 4 comprising a further digital display means located adjacent the bearing sight and outside the optical path of said optical arrangement for displaying the bearing of the sight outside said field of view.

6. A bearing repeater according to any preceding claim comprising means for locking the bearing sight to the repeater so that the bearing displayed is that of the repeater.

FIG.1.

FIG.2.

0008861

FIG.3.

FIG.4.

31
30
16
34
29
24
32

COMPASS

SHIPS HEADING

21

22

SHIPS HEAD

BEARING
RELATIVE TO
SHIPS HEAD

DIFFER-
ENTIAL
SYNCHRO

53    REMOTE
      DIGITAL
      DISPLAY

ABSOLUTE
BEARING

51

SYNCHRO/
DIGITAL
CONVERTER

247    38

DIGITAL
DISPLAYS

FIG.5.

5ЧІ ~39